# EUROPEAN PATENT SPECIFICATION

(11) **EP 0 778 166 B1**
(45) Date of publication and mention of the grant of the patent: **07.11.2001**
(21) Application number: 96119507.0
(22) Date of filing: 05.12.1996
(51) Int. Cl.: B60G 15/06, F16F 1/12

(54) **Assembly for reducing automotive noise and vibration**
Geräusch- und Schwingungsdämpfungseinheit in Kraftfahrzeugen
Ensemble pour réduire bruits et vibrations dans une voiture automobile

(30) Priority: 07.12.1995 US 568903
(43) Date of publication of application: 11.06.1997
(73) Proprietor: BASF CORPORATION, Mount Olive, New Jersey 07828-1234 (US)
(72) Inventor: Kronell, Mike, Wyandotte, Michigan 48192 (US); Huprikar, Anand, Allen Park, Michigan 48101 (US); Boyuka, David, Plymouth, Michigan 48170 (US)
(74) Representative: Abel, Manfred

(56) References cited:
- EP-A- 0 564 824
- DE-A- 3 620 774
- DE-A- 3 827 760
- DE-A- 4 331 585
- FR-A- 2 637 338
- GB-A- 527 468
- US-A- 2 094 569
- US-A- 2 754 112
- US-A- 2 916 282
- US-A- 5 421 565
- WILKENS M: "FEDERELEMENTE AUS MIKROZELLIGEN, DYNAMISCH HOCHBELASTBAREN POLYURETHAN-ELASTOMEREN" ATZ AUTOMOBILTECHNISCHE ZEITSCHRIFT, vol. 97, no. 3, 1 January 1995, pages 170-174, 181, XP000494820

## Description

This invention relates to assemblies for use in vehicle suspension systems, and more particularly, to assemblies for use in vehicle suspension systems containing coil springs. Automobile vehicles are used on a variety of road surfaces and conditions. Bumps and sounds generated by the vehicle on these different surfaces contribute to the ride quality perceived by the driver and passengers. For a vehicle to project an image of value and reliability it is necessary that negative sounds and vehicle responses be minimized. Accordingly, significant attention is given to areas such as the interface between suspension coil springs and vehicle spring seats with the goal of providing firm, secure and quiet performance of the vehicle suspension system.

The points of contact between vehicle suspension components experience a great amount of movement. At some points, work occurs during all types of vehicle operating conditions. A suspension system generally experiences duty cycles comprised of jounces and rebounds in response to inputs from the road surface which the vehicle's tires interface with. Thus, suspension performance has a direct impact on what the owner feels and hears from a vehicle and contributes significantly to a vehicle's perceived ride characteristics.

Negative sounds or noise can often be generated by metal contact between system components. This has often been found to be the case when coil springs are used in a suspension assembly. The ends of the coil springs often contact metal vehicle spring seats. Relative movement occurring during vehicle operation between the spring and the mating vehicle surfaces typically causes objectionable sounds. While it has been conventional to use resilient insulators between the suspension coil spring and its points of contact with the vehicle, it has been found that such systems have a tendency to degenerate over time, particularly at the point of contact. This type of wear is sometimes referred to as point load degradation.

U.S. Patent No. 5,421,565 attempts to resolve this problem by providing a particular foam insulator positioned between the coil spring and the spring seat. The configuration of the foam insulator is intended to eliminate the problem of point load degradation.

GB-A-527,486 describes improved spring mountings for motor vehicles according to the preamble of claim 1 comprising a combination of a disc of rubber having a diameter equal to the outside diameter of the spring and a rigid metal disc arranged at one side of the rubber disc and adapted to lie between the rubber disc and the spring. The metal disc is formed at its centre with a hollow boss and the rubber disc being formed with a projecting position occupying the interior of the boss.

US-A-2,916,283 describes a motor vehicle suspension comprising upper and lower suspension arms pivoted with the vehicle frame and attached to the wheel mounting. The arms are vertically spaced with a coil spring, a cap having an inner and outer flange and an elastic tubular toroid abutting the outer flange, a conical dome support assembly secured to the frame and superimposed the coil spring and cap and having a lower flange superimposed upon the toroid.

However, such configurations are still subject to degradation over time. Also, prior art systems are vulnerable to corrosion due to metal/metal interfaces. Finally, such systems generally require the assembly of multiple components at the point of use. Walk-out problems or extrusion of the foam can also occur.

Accordingly, it would be desirable to provide an assembly for use in suspension systems to reduce automotive noise and vibration which eliminates localized stress distribution and metal to metal contacts.

It would be further desirable that such an assembly be capable of supply to the automotive manufacture as a single unit, without the need for bolts or other separate parts.

It would also be desirable for the assembly to exhibit optimum durability over the life time of the motor vehicle.

Finally, the design of the assembly should ultimately provide cost reductions and improvements in efficiency.

The present invention provides the foregoing desirable advantages. These advantages are achieved by an assembly which comprises a spring seat retainer having at least (a) first and second oppositely directed surfaces, (b) a recessed area in the first surface, and (c) an axially directed interior cavity. The assembly also has a spring isolator which has at least a portion of one surface coexistent with a portion of a second surface of a spring seat retainer. A jounce bumper is positioned so that a portion of its exterior surface is coexistent with a portion of the interior cavity of the spring seat retainer. Finally, the assembly also has a coil spring having a bottom most section retained within the recessed area of the spring seat retainer, such that the coil spring surrounds the jounce bumper. The invention comprises the above assembly and a method for producing this assembly.

It will further be appreciated that the assembly of the invention is actually comprised of a series of sub-assemblies, the first sub-assembly having (1) a spring seat retainer having at least (a) first and second oppositely directed surfaces, (b) a recessed area in the first surface, and (c) an axially directed interior cavity; and (2) a spring isolator having at least a portion of one surface coexistent with a portion of the second surface of the spring seat retainer, such that the spring isolator is releasable connected to the spring seat.

A second sub-assembly comprises the first sub-assembly and a jounce bumper having a exterior surface, a portion of which is coexistent with a portion of the interior cavity of the spring seat retainer of the first sub-assembly.

A third sub-assembly comprises the second sub-assembly and a coil spring having a bottom most section retained within the recessed area of the spring seat retainer, such that the coil spring surrounds the jounce bumper.

It will be appreciated that the final sub-assembly, and hence the assembly of the invention, may further contain attachment means (d) for releasably connecting the assembly to an automotive spring seat or equivalent article. Those skilled in the art will appreciate that such automotive spring seats will generally be welded to the axle of an automotive vehicle.

It is a feature of the assembly of the invention that the supply of the single assembly provides improved efficiency and cost to the end-use automotive manufacturer. Additionally, the use of attachment means (d) provides that metal bolts and fastening devices as previously used are no longer required. This reduces the possibility of joints susceptible to the action of various fluids and corrosion.

Another advantage of the invention is the preferred use of microcellular polyurethane in the construction of the jounce bumper and spring isolator. Microcellular polyurethane provides progressive load deflection behavior and maximum durability. Additionally, the design of the spring isolator as a separate unit allows for the use of microcellular polyurethane of different performance characteristics as compared to the jounce bumper.

It has also been found that the particular construction of the assembly of the invention allows for the design of high performance spring isolators with a relatively low per unit cost.

Finally, the fact that individual component parts may be made for use in assemblies intended for use on a variety of vehicles reduces the per unit cost of the overall assembly. Significant performance differences in the various assemblies are easily achieved, however, due to the use of individually tailored spring isolator and jounce bumper components made of microcellular polyurethane.

Those skilled in the art will further appreciate that the reduction of metal to metal interactions and the elimination of areas vulnerable to point load improves the overall durability and life time performance of the assembly.

Figure 1 provides a cross-sectional side elevation of the assembly of the invention.

Figure 2 provides a cross-sectional side elevation of the assembly of the invention attached to a vehicle spring seat and axle.

Figure 3 provides a respective view of a spring isolator of the assembly of Figure 1.

Figure 4 is a cross-sectional view side elevation of an alternative embodiment of the assembly of the invention as attached to a vehicle spring seat and axle.

Figure 5 is a respective view of the spring isolator of the assembly of Figure 4.

Referring generally to the drawings, various preferred embodiments of the assembly of the invention are illustrated.

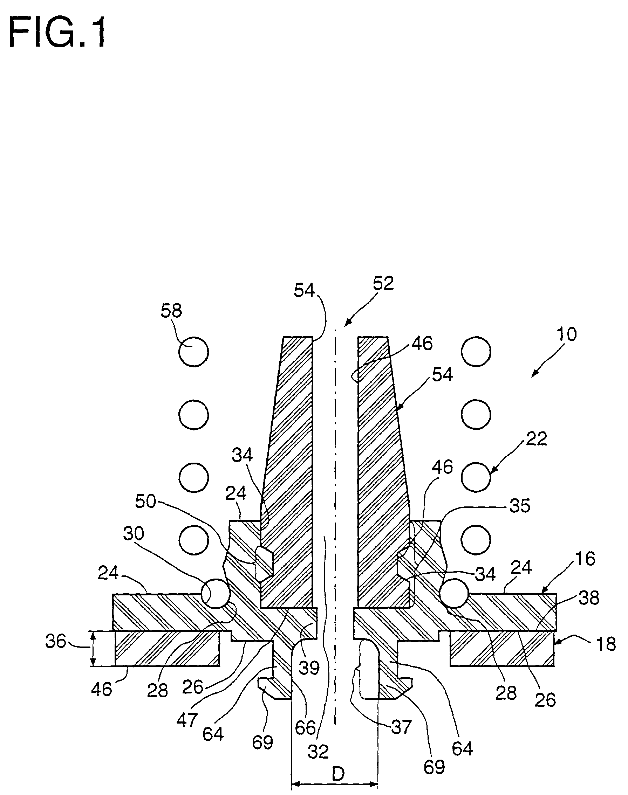

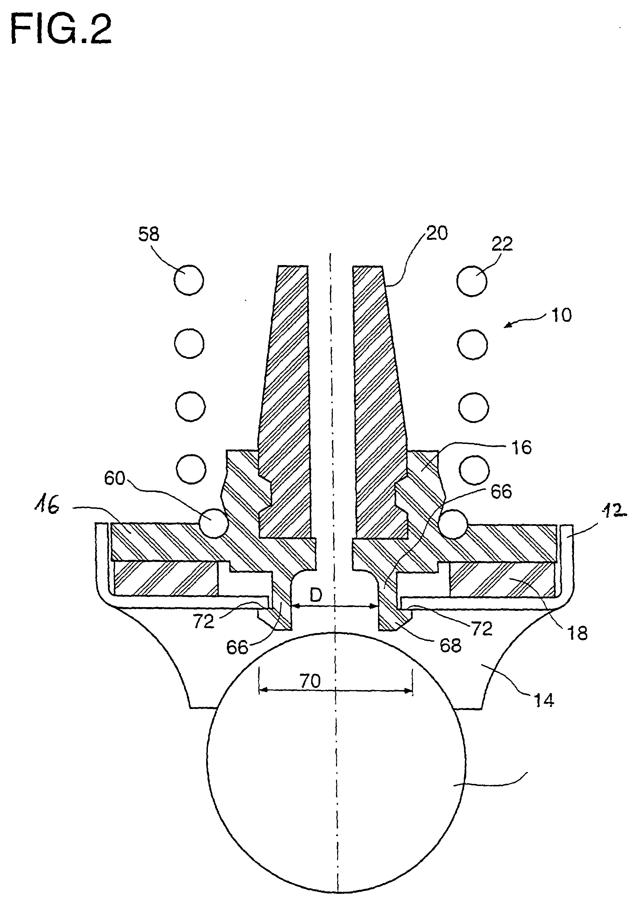

A preferred embodiment is illustrated in Figures 1 and 2. Figure 1 provides a cross-sectional side view of the assembly 10 of the invention. Figure 2 provides a cross-sectional view of the assembly 10 attached to spring seat 12 and axle 14. As shown in Figure 1, assembly 10 is comprised of spring seat retainer 16, spring isolator 18, jounce bumper 20, and coil spring 22.

Spring seat retainer 16 is intended to function as the base or core component of assembly 10 onto which the other components of the assembly are subsequently attached. It will be appreciated by those skilled in the art, that in this manner, the use of bolts and other fasteners are not required, reducing the potential for metal to metal interaction and subsequent noise and corrosion.

The retainer 16 may have a variety of shapes and configurations as necessary to meet engineering requirements. However, the following aspects will generally be present. For example, first and second oppositely directed surfaces 24 and 26 are respectively intended to define the upper or top surface of the retainer 16 and its lower or bottom surface. Either or both of the upper surface 24 or the lower surface 26 may be comprised of a variety of surfaces existing in parallel planes, such as are illustrated in Figure 1.

The spring seat retainer 16 will further contain a recessed area 28 in at least one of the planes of the first or the upper surface 24. Recessed area 28 may also be termed a groove or inverted ridge. Inner surface 30 of recessed area 28 possesses a concave shape relative to first or upper surface 24.

Spring seat retainer 16 further comprises an axially directed interior cavity 32. Cavity 32 is bounded by interior surface 34. Interior surface 34 has an upper section 35 and a lower section 37. Upper section 35 is separated from lower section 37 by radically inward extending shelf 39. In this embodiment, the interior cavity 32 is characterized by notch 48 which protrudes out of the plane of upper section 35 of interior wall surface 34. Notch 48 functions to retain jounce bumper 20 as will be discussed below.

The design of the spring seat retainer provides a significantly large load bearing area for the spring isolator subjected to coil spring loads when compared to conventional coil spring/spring isolator interfaces. As a result, localized compression set is minimized. Thus, spring seat retainer 16 provides for maximum distribution of coil spring loads over spring isolation.

Spring seat retainer 16 may be comprised of any suitable rigid material such as plastic or metal. However, plastic is highly preferred since the use of such materials minimize metal to metal interactions and aides in the reduction of noise transmitted from the road and rear axial to the coil spring. Accordingly, squeaking and other such negatively perceived noises are reduced.

Suitable plastics include nylon, isoprene and polypropylene. A particularly preferred plastic is nylon when performance characteristics are of paramount importance. A particularly preferred and commercially available material is Ultramid[¹ nylon, available from BASF Corporation of Wyandotte, Michigan. Alternatively less expensive materials such as polypropylene may be preferred in some designs.
¹Ultramid is a registered trademark of BASF Aktiengesellschaft and is used under license by BASF Corporation.

An integral component in assembly 10 in the reduction of automotive noise and vibration is spring isolator 18. Isolator 18 functions to dampen vibrations and to reduce noise transmitted from the road/rear axle to the coil spring.

Isolator 18 will generally be comprised of an elastomeric material. Such materials may be foamed or nonfoamed. Suitable materials include polyurethane and rubber, both natural and butyl. Polyurethane, especially foamed or microcellular polyurethane, is preferred. A particularly preferred material is commercially available from BASF Corporation of Wyandotte, Michigan as Elastocell]² microcellular polyurethane. Elastocell] microcellular polyurethane generally has a density of from 0.20 gm/cm³ to 0.80 gm/cm³. Densities of from .30 to .65 gm/cm³ are preferred, with densities of from .35 to .60 gm/cm³ most preferred.
²Elastocell] is a trademark of Elastogran GmbH and is used under license by BASF Corporation.

Illustrative materials will generally have compression sets (ASTM D 3574 TEST D) of no more than 20%. Compression sets of no more than 10% are preferred, with compression sets of no more than 6% being most preferred. In addition, such materials will generally have tear strengths (ASTM D 624) of at least 8 KN/mm. Tear strengths of at least 12 KN/mm are preferred with tear strengths of at least 20 KN/mm or more being most preferred. Finally, illustrative materials will be characterized by exceptional durability. Those skilled in the art will appreciate that durability is dependent upon part design and configuration. Most commonly, durability will be evaluated in terms of the number of cycles achieved prior to part failure under a certain load.

The use of microcellular polyurethane is particularly advantageous since a wide range of performance characteristics, such as the damping of a particular frequency ranges, can be achieved through the manipulation of the polyurethane composition and/or part geometry.

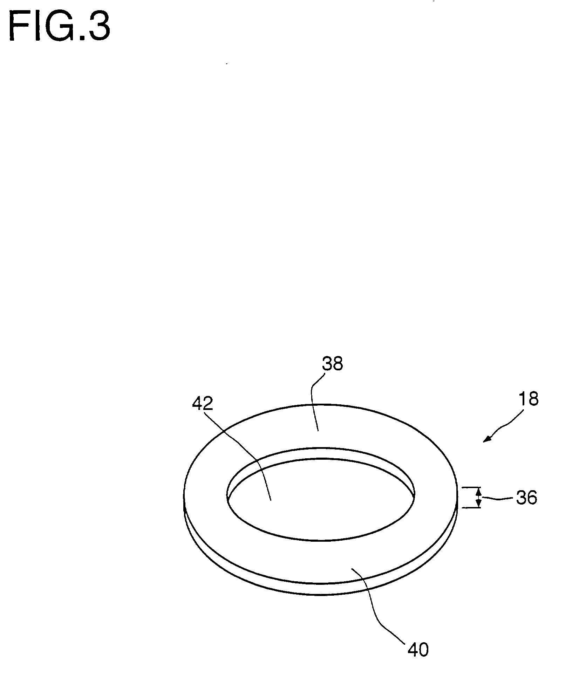

The shape and configuration of the spring isolator 18 provides further advantages to the assembly 10. In general, isolator 18 will have a thickness or height 36 of from between 1-100 mm with thicknesses 36 of from 5-55 mm preferred. Thickness of 10-30 mm are most preferred. In general, isolator 18 will possess a wafer or slab like configuration, such as that illustrated in Figure 3. Isolator 18 will thus generally have an upper surface 38 and an oppositely directed lower surface 40.

Spring isolator 18 will generally be attached to spring seat retainer 16 such that at least a portion of upper surface 38 of isolator 18 is coexistent with at least a portion of the second or lower surface 26 of spring seat retainer 16. Isolator 18 may be attached or joined to spring seat retainer 16 via compression fit or mechanical means.

Although it is not essential, spring isolator 18 will generally have an open interior portion 42. It will be appreciated by those skilled in the art that spring isolator 18 need not be confined to the cylindrical disk shape illustrated in Figure 3. Rather, isolator 18 may have a square shape or the like as necessary to achieve the coexistence between the upper surface 38 of isolator 18 and the second or lower surface 26 of spring seat retainer 16.

The configuration of the isolator 18 allows for the use of what would otherwise be prohibitively expensive materials in the construction of isolator 18. The wafer, disk or slab like configuration of isolator 18 allows for the use of isolator manufacturing techniques wherein a single large unit is molded or shaped. A plurality of individual isolators can then be fashioned via slicing or cutting, from the single large unit. This manufacturing technique results in a substantially lower per unit cost with respect to isolator 18. It will be appreciated by those skilled in the art that such advantages could not be achieved with prior art assembly constructions.

The attachment of isolator 18 to spring seat retainer 16 results in a the formation of a first sub-assembly 44.

Disposed within the axially directed interior cavity 32 of spring seat retainer 16 is jounce bumper 20. Jounce bumper 20 is positioned within cavity 32 such that at least a portion of the outer surface 46 of jounce bumper 20 is coexistent with the interior surface 34 of cavity 32 of retainer 16. In particular, the bottom 47 of jounce bumper 20, rests on the shelf 39 of spring seat retainer 16.

Jounce bumper 20 may be securely positioned within the interior cavity 32 of retainer 16 by means of the die lock construction, as illustrated in Figure 1 or via mechanical interference. As illustrated in Figure 1, the inner wall or surface 34 of spring seat retainer is configured such that protruding notch 48 is configured to match a recessed or grooved section 50 of outer surface 46 of jounce bumper 20.

Jounce bumper 20 may further have axially directed inner core cavity 52 bounded by interior walls 54. Those skilled in the art will appreciate that the construction of interior cavity 52 is such that use with struts is possible, but not required. Thus, cavity 52 is optional.

In fact, it is an advantage of the assembly of the invention that use with struts is not necessary and is not preferred.

Jounce bumper 20 will generally be comprised of an elastomeric material such as polyurethane or natural or synthetic rubber such as that described above with respect to isolated 18. Preferred is microcellular polyurethane such as that discussed above with respect to spring isolator 18. However, it will be appreciated that the construction of the assembly 10 is such that microcellular polyurethane, and particularly Elastocell] microcellular polyurethane, of varying density and performance characteristics may be used in order to obtain various assemblies having particularly directed performance characteristics.

The addition of jounce bumper 22 to the first assembly 44, comprised of spring seat retainer 16 and spring isolator 18, results in the formation of a second sub-assembly 56.

To second sub-assembly 56 is additionally joined coil spring 22. Coil spring 22 will generally be comprised of metal and will have a construction such as those traditionally known in the art. The coil spring 22 will generally have an upper top most portion 58 and a lower or bottom most portion 60. Bottom most portion 60 of coil spring 22 is a releasably attached to spring seat retainer 16 by means of positioning bottom most portion 60 within the recessed area 28 of first upper surface 24 of spring seat retainer 16. It will be appreciated that coil spring 22 surrounds the jounce bumper 20 and that the jounce bumper 20 extends upwards through coil spring 22.

The attachment of coil spring 22 to the second sub-assembly 56 results in the formation of a third sub-assembly 62, which may be further termed complete assembly 10.

As illustrated in Figure 1, assembly 10 is a single unit lacking loose parts and is capable of immediate attachment to a spring seat.

Attachment of assembly 10 will generally take place via attachment means 64 of spring seat retainer 16. Attachment means 64 are generally comprised of extending arm 66 and attachment hook 68.

In general, there will be at least two extending arms 66, which are obviously opposed so as to create a distance D₁ there between. Extending arm 66 can be configured such that the distance D₁ at rest is greater than the distance D₁ when extending arms 66 are positioned within the opening 70 of spring seat 12. The restraining lip 72 of attachment hook 68 ensures that assembly 10 fits securely within spring seat 12.

Those skilled in the art will appreciate that spring seat 12 will preferably consist of a steel stamping and maybe welded to an axle 14 or otherwise mounted to the rest of an automobile. The later will be true in the case of upper mounts. The spring seat design is intended to provide a means to locate and fix the isolator and to provide a location in which the overall assembly 10 may be locked into place.

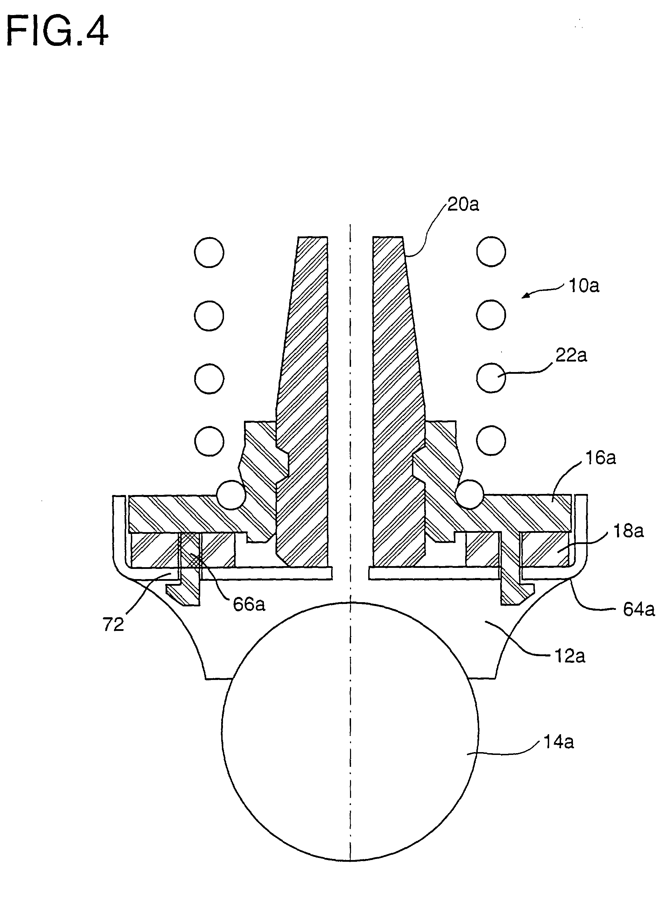

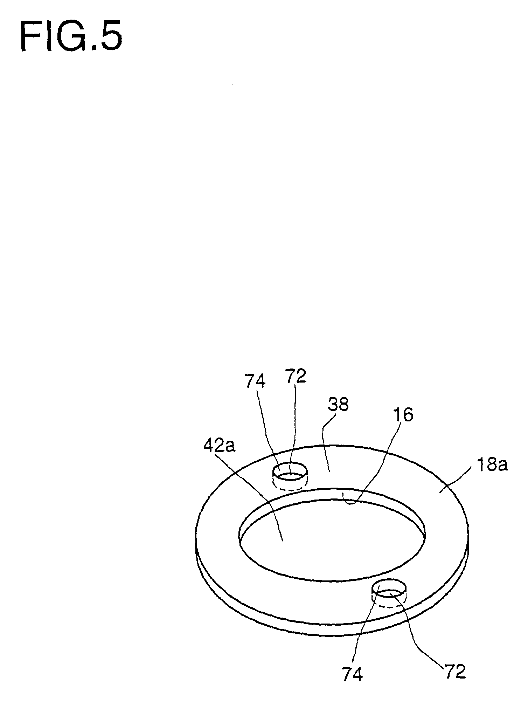

Turning to an alternate embodiment of the assembly 10, Figure 4 illustrates an assembly 10a which is comprised of a spring seat retainer 16a, a spring isolator 18a, a jounce bumper 20a and coil spring 22a. It will be appreciated that in general, the configuration of this embodiment corresponds to the discussion with respect to the embodiment of Figures 1 and 2. However, attachment means 64a extends through spring isolator 18a through cavity 72 of isolator 18a illustrated in Figure 5. Extending arm 66a extends through the cavity or hole 72 in isolator 18a such that the outer surface 74 of extending arm 66 is coexistent with the interior surface 76 of inter hole or cavity 42a of isolator 18a. In this matter, isolator 18a is securely positioned between spring seat retainer 16a and spring seat 12a.

It should be understood that while the invention herein shown and described constitutes the preferred embodiments of the invention they are not intended to illustrate all possible forms. A variety of assembly constructions of varying configurations can be created by one of ordinary skill in the art without departing from the scope of the invention as disclosed in the appended claims.

## Claims

1. An assembly for use in reducing automotive noise and vibration, the assembly comprising:
a spring seat retainer (16), (16a) comprising (a) first and second oppositely directed surfaces (24), (26), (b) a recessed area in the first surface (28), (c) an axially directed interior cavity (32); and
a spring isolator (18), (18a) having at least a portion of one surface coexistent with a portion of the second surface of the spring seat retainer; **characterised in** further comprising
a jounce bumper (20), (20a) having an exterior surface, a portion of which is coexistent with a portion of the interior cavity of the spring seat retainer; and
a coil spring (22), (22a) having a bottom most section retained within the recessed area of the spring seat retainer, such that the coil spring surrounds the jounce bumper.

2. The assembly of claim 1 wherein the spring seat retainer further comprises (d) attachment means for releasably connecting the assembly to an automotive spring seat.

3. The assembly of claim 1 wherein the spring seat retainer is comprised of a polymer.

4. The assembly of claim 3 wherein the spring seat retainer is comprised of a polymer selected from the group consisting of nylon and polypropylene.

5. The assembly of claim 1 wherein the spring isolator is comprised of a microcellular polyurethane.

6. The assembly of claim 5 wherein the spring isolator is comprised of a microcellular polyurethane having a density of from .20 to .80 gm/cm³.

7. The assembly of claim 1 wherein the jounce bumper is comprised of a microcellular polyurethane.

8. The assembly of claim 6 wherein the microcellular polyurethane has a compression set of no more than 10%.

9. An assembly for use in reducing automotive noise and vibration of claim 1, the assembly further comprising:
a spring isolator (18a) having at least a portion of one surface coexistent with a portion of the second surface of the spring seat retainer, such that the spring isolator (18a) is releasably connected to the spring seat.

10. The assembly of claim 9 wherein the spring seat retainer further comprises (d) attachment means for releasably connecting the assembly to an automotive spring seat.

11. The assembly of claim 9 wherein the spring seat retainer is comprised of a polymer.

12. The assembly of claim 9 wherein the spring seat retainer is comprised of a polymer selected from the group consisting of nylon and polypropylene.

13. The assembly of claim 9 wherein the spring isolator is comprised of a microcellular polyurethane.

14. The assembly of claim 13 wherein the spring isolator is comprised of a microcellular polyurethane having a density of at least .20 gm/cm³ and a compression set of at least 15%.

15. The assembly of claim 9 wherein the jounce bumper is comprised of a microcellular polyurethane.

16. The assembly of claim 13 wherein the microcellular polyurethane has a compression set of no more than 10%.

17. The assembly of claim 18 wherein the spring isolator is a slice cut from a single molded unit and has a thickness of from 5 mm to 55 mm.

18. A method of producing an assembly for use in reducing automotive noise and vibration, the method comprising:
providing a spring seat retainer (16), (16a) comprising (a) first and second oppositely directed surfaces (24), (26), (b) a recessed area in the first surface (28), and (c) an axially directed interior cavity (32);
affixing a spring isolator (18), (18a) to the spring seat retainer, such that at least a portion of one surface of the isolator is coexistent with a portion of the second surface of the spring seat retainer;
releasably connecting a jounce bumper (20), (20a) to the spring seat retainer, such that a portion of an exterior surface of the jounce bumper is coexistent with a portion of the interior cavity of the spring seat retainer; and
placing a bottom most portion of a coil spring (22), (22a) within the recessed area of the spring seat retainer, such that the coil spring surrounds the jounce bumper.

## Patentansprüche

1. Anordnung zur Geräusch- und Schwingungsdämpfung in Kraftfahrzeugen, die folgendes umfaßt:
einen Federlagerhalter (16), (16a) mit (a) ersten und zweiten entgegengesetzt ausgerichteten Flächen (24), (26), (b) einem ausgesparten Bereich in der ersten Fläche (28), (c) einem axial ausgerichteten Innenhohlraum (32); und
eine Isolationsfeder (18), (18a), bei der mindestens ein Teil einer Fläche mit einem Teil der zweiten Fläche des Federlagerhalters koexistent ist; **dadurch gekennzeichnet, daß** sie weiterhin folgendes umfaßt:
einen Einfederungsanschlag (20), (20a) mit einer Außenfläche, von der ein Teil mit einem Teil des Innenhohlraums des Federlagerhalters koexistent ist; und
eine Schraubenfeder (22), (22a) mit einem am weitesten unten gelegenen Abschnitt, der in dem ausgesparten Bereich des Federlagerhalters so festgehalten wird, daß die Schraubenfeder den Einfederungsanschlag umgibt.

2. Anordnung nach Anspruch 1, bei der der Federlagerhalter weiterhin (d) Befestigungsmittel zur lösbaren Verbindung der Anordnung mit einem Kraftfahrzeugfederlager umfaßt.

3. Anordnung nach Anspruch 1, bei der der Federlagerhalter aus einem Polymer besteht.

4. Anordnung nach Anspruch 3, bei der der Federlagerhalter aus einem Polymer besteht, das aus der Nylon und Polypropylen umfassenden Gruppe ausgewählt ist.

5. Anordnung nach Anspruch 1, bei der die Isolationsfeder aus einem mikrozellularen Polyurethan besteht.

6. Anordnung nach Anspruch 5, bei der die Isolationsfeder aus einem mikrozellularen Polyurethan mit einer Dichte von 0,20 - 0,80 g/cm³ besteht.

7. Anordnung nach Anspruch 1, bei der der Einfederungsanschlag aus einem mikrozellularen Polyurethan besteht.

8. Anordnung nach Anspruch 6, bei der das mikrozellulare Polyurethan einen Druckverformungsrest von höchstens 10% aufweist.

9. Anordnung zur Geräusch- und Schwingungsdämpfung in Kraftfahrzeugen nach Anspruch 1, die weiterhin folgendes umfaßt:
eine Isolationsfeder (18a) bei der mindestens ein Teil einer Fläche mit einem Teil der zweiten Fläche des Federlagerhalters koexistent ist, so daß die Isolationsfeder (18a) mit dem Federlager lösbar verbunden ist.

10. Anordnung nach Anspruch 9, bei der der Federlagerhalter weiterhin (d) Befestigungsmittel zur lösbaren Verbindung der Anordnung mit einem Kraftfahrzeugfederlager umfaßt.

11. Anordnung nach Anspruch 9, bei der der Federlagerhalter aus einem Polymer besteht.

12. Anordnung nach Anspruch 9, bei der der Federlagerhalter aus einem Polymer besteht, das aus der Nylon und Polypropylen umfassenden Gruppe ausgewählt ist.

13. Anordnung nach Anspruch 9, bei der die Isolationsfeder aus einem mikrozellularen Polyurethan besteht.

14. Anordnung nach Anspruch 13, bei der die Isolationsfeder aus einem mikrozellularen Polyurethan mit einer Dichte von mindestens 0,20 g/cm³ und einem Druckverformungsrest von mindestens 15% besteht.

15. Anordnung nach Anspruch 9, bei der der Einfederungsanschlag aus einem mikrozellularen Polyurethan besteht.

16. Anordnung nach Anspruch 13, bei der das mikrozellulare Polyurethan einen Druckverformungsrest von höchstens 10% aufweist.

17. Anordnung nach Anspruch 18, bei der die Isolationsfeder eine von einer einstückig geformten Einheit abgeschnittene Scheibe ist und eine Dicke von 5 mm bis 55 mm aufweist.

18. Verfahren zur Herstellung einer Anordnung zur Geräusch- und Schwingungsdämpfung in Kraftfahrzeugen, bei dem man
einen Federlagerhalter (16), (16a) mit (a) ersten und zweiten entgegengesetzt ausgerichteten Flächen (24), (26); (b) einem ausgesparten Bereich in der ersten Fläche (28) und (c) einem axial ausgerichteten Innenraum bereitstellt;
eine Isolationsfeder (18), (18a) an dem Federlagerhalter so anbringt, daß mindestens ein Teil einer Fläche des Isolators mit einem Teil der zweiten Fläche des Federlagerhalters koexistent ist;
einen Einfederungsanschlag (20), (20a) mit dem Federlagerhalter lösbar so verbindet, daß ein Teil einer Außenfläche des Einfederungsanschlags mit einem Teil des Innenhohlraums des Federlagerhalters koexistent ist; und
einen am weitesten unten gelegenen Teil einer Schraubenfeder (22), (22a) so in den ausgesparten Bereich des Federlagerhalters einlegt, daß die Schraubenfeder den Einfederungsanschlag umgibt.

## Revendications

1. Ensemble utilisé pour réduire les bruits et les vibrations dans une voiture automobile, l'ensemble comprenant :
un support de siège à ressort (16), (16a) comprenant (a) des première et deuxième surfaces opposées (24), (26), (b) une zone évidée dans la première surface (28), (c) une cavité intérieure orientée axialement (32); et
un isolateur à ressort (18), (18a) ayant au moins une partie d'une surface coexistant avec une partie de la deuxième surface du support de siège à ressort; **caractérisé en ce qu'**il comprend en outre :
un amortisseur de vibrations (20), (20a) ayant une surface extérieure, dont une partie est coexistante avec une partie de la cavité intérieure du support de siège à ressort; et
un ressort hélicoïdal (22), (22a) ayant une section la plus inférieure fixée à l'intérieur de la zone évidée du support de siège à ressort, de telle sorte que le ressort hélicoïdal entoure l'amortisseur de vibrations.

2. Ensemble selon la revendication 1, dans lequel le support de siège à ressort comprend en outre (d) un moyen de fixation pour attacher de manière détachable l'ensemble à un siège à ressort d'une voiture automobile.

3. Ensemble selon la revendication 1, dans lequel le support de siège à ressort est composé d'un polymère.

4. Ensemble selon la revendication 3, dans lequel le support de siège à ressort est composé d'un polymère sélectionné dans le groupe constitué de nylon et de polypropylène.

5. Ensemble selon la revendication 1, dans lequel l'isolateur à ressort est composé d'un polyuréthane microcellulaire.

6. Ensemble selon la revendication 5, dans lequel l'isolateur à ressort est composé d'un polyuréthane microcellulaire ayant une densité de 0,20 à 0,80 gm/cm³.

7. Ensemble selon la revendication 1, dans lequel l'amortisseur de vibrations est composé d'un polyuréthane microcellulaire.

8. Ensemble selon la revendication 6, dans lequel le polyuréthane microcellulaire a une déformation permanente après compression non supérieure à 10 %.

9. Ensemble utilisé pour réduire les bruits et les vibrations dans une voiture automobile selon la revendication 1, l'ensemble comprenant en outre :
un isolateur à ressort (18a) ayant au moins une partie d'une surface coexistant avec une partie de la deuxième surface du support de siège à ressort, de telle sorte que l'isolateur à ressort (18a) soit fixé de manière détachable au siège à ressort.

10. Ensemble selon la revendication 9, dans lequel le support de siège à ressort comprend en outre (d) un moyen de fixation pour fixer de manière détachable l'ensemble à un siège à ressort d'une voiture automobile.

11. Ensemble selon la revendication 9, dans lequel le support de siège à ressort est composé d'un polymère.

12. Ensemble selon la revendication 9, dans lequel le support de siège à ressort est composé d'un polymère sélectionné dans le groupe constitué de nylon et de polypropylène.

13. Ensemble selon la revendication 9, dans lequel l'isolateur à ressort est composé d'un polyuréthane microcellulaire.

14. Ensemble selon la revendication 13, dans lequel l'isolateur à ressort est composé d'un polyuréthane microcellulaire ayant une densité d'au moins 0,20 gm/cm³ et une déformation permanente après compression d'au moins 15 %.

15. Ensemble selon la revendication 9, dans lequel l'amortisseur de vibrations est composé d'un polyuréthane microcellulaire.

16. Ensemble selon la revendication 13, dans lequel le polyuréthane microcellulaire a une déformation permanente après compression non supérieure à 10 %.

17. Ensemble selon la revendication 18, dans lequel l'isolateur à ressort est une plaquette découpée dans une simple unité moulée et a une épaisseur de 5 mm à 55 mm.

18. Méthode pour fabriquer un ensemble utilisé pour réduire les bruits et les vibrations dans une voiture automobile, la méthode comprenant :
la fourniture d'un support de siège à ressort (16), (16a) comprenant (a) des première et deuxième surfaces opposées (24), (26), (b) une zone évidée dans la première surface (28), (c) une cavité intérieure orientée axialement (32);
la fixation d'un isolateur à ressort (18), (18a) au support de siège à ressort, de telle sorte qu'au moins une partie d'une surface de l'isolateur soit coexistante avec une partie de la deuxième surface du support de siège à ressort;
la fixation de manière détachable d'un amortisseur de vibrations (20), (20a) au support de siège à ressort, de telle sorte qu'une partie d'une surface extérieure de l'amortisseur de vibrations soit coexistante avec une partie de la cavité intérieure du support de siège à ressort; et
la mise en place d'une section la plus inférieure d'un ressort hélicoïdal (22), (22a) à l'intérieur de la zone évidée du support de siège à ressort, de telle sorte que le ressort hélicoïdal entoure l'amortisseur de vibrations.
